Europäisches Patentamt

European Patent Office

Office européen des brevets

(11) Veröffentlichungsnummer: **0 408 844 B1**

(12) **EUROPÄISCHE PATENTSCHRIFT**

(45) Veröffentlichungstag der Patentschrift: **21.12.94**

(51) Int. Cl.5: **B60T 13/66**

(21) Anmeldenummer: **90108300.6**

(22) Anmeldetag: **02.05.90**

(54) **Verfahren zur Regelung des Druckes, insbesondere in einer Bremsanlage eines Fahrzeuges.**

(30) Priorität: **19.07.89 DE 3923853**

(43) Veröffentlichungstag der Anmeldung:
**23.01.91 Patentblatt 91/04**

(45) Bekanntmachung des Hinweises auf die
Patenterteilung:
**21.12.94 Patentblatt 94/51**

(84) Benannte Vertragsstaaten:
**ES FR GB IT NL SE**

(56) Entgegenhaltungen:
**EP-A- 0 226 803**
**DE-A- 3 627 278**
**GB-A- 1 600 462**

(73) Patentinhaber: **DAIMLER-BENZ AKTIENGE-
SELLSCHAFT**
**Mercedesstrasse 136**
**D-70327 Stuttgart (DE)**

(72) Erfinder: **Schätzle, Heinz**
**Schlusshaldenstrasse 1**
**D-7300 Esslingen/Mettingen (DE)**

Rank Xerox (UK) Business Services
(3.10/3.09/3.3.3)

## Beschreibung

Die Erfindung betrifft ein Verfahren zur Regelung des Druckes insbesondere in einer Bremsanlage eines Fahrzeuges gemäß dem Oberbegriff des Patentanspruches 1.

Bei einem gattungsgemäßen Verfahren für eine druckmittelbetätigte Fahrzeugbremsanlage ist bekannt (EP-A-0 226 803), mit einer Regelelektronik den Druck in mindestens einen Bremszylinder mit Hilfe zumindest eines Drucksteuerventiles einzusteuern. Die Drucksteuerventile weisen dabei drei Schaltstellungen zum Druckaufbau (Belüften), Druckabbau (Entlüften) und Druckhalten (Haltestellung) auf. In einer Lernphase wird der zeitliche Verlauf des Druckistwertes bei den Zuständen Druckaufbau und Druckabbau des Schaltventiles aufgenommen und in einer Recheneinheit abgespeichert. Somit sind zwei Kennlinien abgespeichert. Von zumindest einem Drucksensor wird der in die Bremszylinder eingesteuerte Istbremsdruck gemessen, durch Subtraktion des gemessenen Wertes vom Drucksollwert eine Druckdifferenz gebildet, und ein Schaltspiel (Regelzyklus) des Drucksteuerventils beginnt, indem die Recheneinheit aus einer der abgespeicherten Druck-Zeit-Funktionen (Kennlinien) mit den jeweils anstehenden Momentanwerten des Ist- und Solldrucksignals die Einschaltzeit bestimmt. Dazu wird auf der für Druckaufbau oder der für Druckabbau entsprechenden Kennlinie eine Zuordnung des Drucksollwertes zu einer Ausschaltzeit sowie eine Zuordnung des Druckistwertes zu einer Einschaltzeit durchgeführt und aus der Differenz zwischen der Ausschaltzeit und der Einschaltzeit die Einschaltdauer bestimmt.

Bei dem bekannten Verfahren wird zwar die Dynamik des Drucksteuerventils berücksichtigt, jedoch geschieht dies nur für kurze Einschaltzeiten dadurch, daß die Einschaltzeit nicht mehr mittels der abgespeicherten Kennlinien, sondern mittels zweier Formeln, die jeweils vier Summanden aufweisen, berechnet wird. Die Summanden enthalten insgesamt sechs vom Druckniveau im Bremszylinder abhängige Funktionen, wobei die Funktionen zunächst unbekannt sind und in einer Anfangsphase bestimmt werden müssen. In die Formeln geht neben dem Druck im Bremszylinder auch die Temperatur des Schaltmagneten ein. Hingegen werden mittels dieser Funktionen keine Schalttotzeiten des Ventils berücksichtigt und es ist auch nicht vorgesehen, Einschwingvorgänge des Druckes nach einem Schaltspiel des Drucksteuerventils abzuwarten.

Des weiteren ist ein Verfahren bekannt (DE 36 27 278 A1), wonach der Druckistwert aufgrund einer momentanen Regelabweichung von einem Drucksollwert diesem Drucksollwert nachgeführt wird. Liegt der Drucksollwert über dem Druckistwert, wird mindestens ein Schaltventil in den Zustand "Belüften" geschaltet. Erreicht der Druckistwert den Drucksollwert, werden die sich in dem Zustand "Belüften" befindenden Schaltventile so geschaltet, daß der Druckistwert bei diesem Drucksollwert bleibt, bis eine Änderung des Drucksollwertes erfolgt.

Nachteilig wirkt sich bei diesem Verfahren aus, daß das Kriterium des Umschaltens der Schaltventile aus der momentan gültigen Differenz $\mu$ zwischen dem Drucksollwert und dem Druckistwert abgeleitet wird. Dadurch kommt es aufgrund der Totzeiten und Verzögerungszeiten bei dem sich nach einem Schaltvorgang einstellenden Druck zu einem Überschwingen. Bei diesem Überschwingen ändert die Differenz $\mu$ ihr Vorzeichen, so daß die Schaltventile so umgeschaltet werden, daß der Druckistwert wieder dem Drucksollwert nachgeführt wird. Aufgrund dieses Umschaltens wird der Drucksollwert wieder erreicht, wobei wieder ein Überschwingen auftritt, woraufhin wiederum ein Umschalten der Schaltventile erfolgt. Aufgrund des Überschwingens kommt es somit zu einem Rattern, d.h. dauernden Umschalten des Schaltventiles, wobei der Druckistwert Schwankungen um den Drucksollwert ausführt. Zur Vermeidung dieses Ratterns ist es grundsätzlich bekannt, statt der Schaltventile mit der Zweipunktcharakteristik (Schaltzustände: -1, 1) Schaltventile mit einer Dreipunktcharakteristik (Schaltzustände: -1, 0, 1) zu verwenden, wobei die Breite des Bereiches, in dem das Schaltventil mit der Dreipunktcharakteristik auf den Zustand 0 schaltet, den Bereich des Überschwingens charakterisiert, in dem keine Umschaltung des Schaltventiles erfolgt. Es ist jedoch grundsätzlich nicht möglich, zwischen einer bleibenden Differenz $\mu$ und einer nur kurzzeitigen Differenz $\mu$ aufgrund eines Überschwingens zu unterscheiden, so daß bei einer zunehmenden Breite des Bereiches, in dem das Schaltventil auf den Zustand 0 schaltet zwar eine sich einstellende Druckschwingung um den Sollwert bei einem Überschwingen ausgeglichen werden kann, allerdings können mit zunehmender Breite des Bereiches, in dem das Schaltventil auf den Zustand 0 schaltet, zunehmend größere bleibende Differenzen $\mu$ auftreten. Es ist auch bekannt, alternativ zur Verwendung eines Schaltventiles mit einer Dreipunktcharakteristik ein Schaltventil mit einer Zweipunktcharakteristik und einer Hysterese einzusetzen, wobei für die Breite des Hysteresebereiches dieselben Aussagen gelten wie für die Breite des Zustandes 0 bei einem Schaltventil mit einer Dreipunktcharakteristik.

Des weiteren sind aus der Theorie der Abtastregelungen verschiedene Regelverfahren bekannt, die sich mit der Regelung von Prozessen mit Totzeiten befassen. Als Beispiel seien hier der Prädiktorregler und der Deadbeatregler genannt.

Bei diesen Reglertypen ergibt sich als Hauptnachteil, daß die Dynamik des Prozeßmodells in analytischer Form bekannt sein muß.

Aufgabe der Erfindung ist es, ein Verfahren zur Regelung des Druckes insbesondere in einer Bremsanlage eines Fahrzeuges so zu entwickeln, daß die Totzeiten des Reglers sowie die Verzögerungszeiten des Prozeßmodells bei dem Regelverfahren berücksichtigt werden, so daß kein Rattern des Schaltventiles mit einer Dreipunktcharakteristik auftritt aufgrund von Schwingungen des Druckistwertes um den Drucksollwert bei einer möglichst geringen zu tolerierenden bleibenden Differenz $\mu$.

Diese Aufgabe wird bei einem gattungsgemäßen Verfahren zur Regelung des Druckes insbesondere in einer Bremsanlage eines Fahrzeuges erfindungsgemäß mit den kennzeichnenden Merkmalen des Anspruchs 1 gelöst, wobei die Merkmale der Unteransprüche vorteilhafte Aus- und Weiterbildungen kennzeichnen.

Weitere Vorteile der Erfindung bestehen darin, daß sich keine Druckschwingungen um einen Arbeitspunkt einstellen, da nach dem erfindungsgemäßen Verfahren der Druckistwert dem Drucksollwert so nachgeführt wird, daß ein Überschwingen des Druckistwertes vermieden wird.

Vor der Durchführung des erfindungsgemäßen Verfahrens werden für das Schaltventil bei den beiden Schaltzuständen "Be-" und "Entlüften" jeweils eine Kennlinie aufgenommen. In diesen Kennlinien wird der Druckistwert $p_i$ über der Zeit aufgetragen.

Bei der Durchführung des erfindungsgemäßen Verfahrens wird am Beginn eines Regelzyklus die Differenz $\mu_{in}$ zwischen dem Drucksollwert $p_{sin}$ und dem Druckistwert $p_{iin}$ ermittelt. Ist der Drucksollwert $p_{sin}$ größer als der Druckistwert $p_{iin}$, wird bei der Durchführung des erfindungsgemäßen Verfahrens die dem Schaltzustand "Belüften" entsprechende Kennlinie verwendet. Ist der Drucksollwert $p_{sin}$ kleiner als der Druckistwert $p_{iin}$, wird bei der Durchführung des erfindungsgemäßen Verfahrens die dem Schaltzustand "Entlüften" entsprechende Kennlinie verwendet.

Bei dem erfindungsgemäßen Verfahren erfolgt aufgrund der Kennlinie $p_i = f(t)$ eine Zuordnung des Druckistwertes $p_{iin}$ am Beginn eines Regelzyklus zu der Einschaltzeit $t_1$ sowie eine Zuordnung des Drucksollwertes $p_{sin}$ am Beginn eines Regelzyklus zu der Ausschaltzeit $t_2$. Die Differenz der Zeiten $t_2$ und $t_1$ entspricht dem Zeitraum, der bei einem "Durchfahren" des gesamten Druckbereiches benötigt wird für die Änderung des Druckes um die Differenz $\mu_{in}$, wobei sich die Differenz $\mu_{in}$ ergibt durch Subtraktion des Druckistwertes $p_{iin}$ von dem Drucksollwert $p_{sin}$. Um daraus die für die Druckänderung notwendige Einschaltdauer $t_{ein}$ des Schaltventiles zu bestimmen, müssen noch die

Totzeit $T_{ein}$ beim Einschalten des Schaltventiles sowie die Totzeit $T_{aus}$ beim Ausschalten des Schaltventiles berücksichtigt werden. Die Totzeit $T_{ein}$ des Schaltventiles stellt dabei die kleinste Einschaltdauer des Schaltventiles dar, bei der noch eine Druckänderung stattfindet. Die Totzeit $T_{aus}$ stellt dabei die Zeitdauer dar, während der nach dem Abschalten des Schaltventiles noch eine Druckänderung stattfindet. Die Einschaltdauer $t_{ein}$ des Schaltventiles ergibt sich dann nach der Formel:

$$t_{ein} = T_{ein} + ( t_2 - t_1 ) - T_{aus} .$$

Nachdem somit die Einschaltdauer $t_{ein}$ des Schaltventiles für einen Regelzyklus a priori ermittelt wurde, wird während der Phase I des Regelzyklus das Schaltventil auf den entsprechenden Zustand "Be-" bzw. "Entlüften" geschaltet.

Anschließend wird in einer Phase II des Regelzyklus das Schaltventil für eine Zeitdauer $t_H$ auf den Zustand "Halten" geschaltet. Diese Phase II des Regelzyklus dient dazu, das Einschwingen des Druckes auf einen bestimmten Wert nach dem Umschalten des Schaltventiles abzuwarten, bevor ein neuer Vergleich des Druckistwertes $p_i$ mit dem Drucksollwert $p_s$ durchgeführt wird. Am Ende der Phase II des Regelzyklus startet ein neuer Regelzyklus.

Ein solcher Regelzyklus hat eine Gesamtzeitdauer $t_{ges}$, die sich aus der Einschaltdauer $t_{ein}$ zuzüglich der Zeitdauer $t_H$ ergibt. Die Gesamtzeitdauer $t_{ges}$ kann dabei Werte bis in der Größenordnung von ca. 100 msec einnehmen. In einer besonders vorteilhaften Ausgestaltung des erfindungsgemäßen Verfahrens kann ein Eingriff in den Regelzyklus bei deutlichen Sollwertänderungen erfolgen, um auf diese deutlichen Sollwertänderungen ein besonders schnelles Ansprechen der Nachführung des Druckistwertes zu realisieren.

Eine Möglichkeit, auf zeitlich schnelle Sollwertänderungen zu reagieren, besteht darin, den Bereich $t_H$, d.h. die Phase II des Regelzyklus zu verkürzen. Das Kriterium für eine zeitlich schnelle Sollwertänderung besteht dabei darin, daß am Ende des Regelzyklus eine Differenz $\mu_{Ende}$ oberhalb eines Schwellwertes $SW_{\mu Ende}$ auftritt. Daraus wird geschlossen, daß sich der Sollwert $p_s$ während des Regelzyklus stark geändert hat, so daß auf ein genaues Einschwingen des Druckistwertes $p_i$ auf den Drucksollwert $p_{sin}$ beim nächsten Regelzyklus verzichtet werden kann. Die Differenz $\mu$ kann dann in vorteilhafter Weise minimiert werden, indem die Phase II des Regelzyklus verkürzt wird. Der Schwellwert $SW_{\mu Ende}$ muß dabei so gewählt werden, daß eine Dekrementierung der Zeitdauer $t_H$ erst erfolgt, wenn die Differenz $\mu_{Ende}$ betragsmäßig deutlich über dem Betrag der Differenz liegt, die sich zwischen der Amplitude des Überschwingens und dem nach dem Einschwingvorgang zu erreichenden Drucksollwert $p_{iin}$ am Beginn des Regelzyklus ergibt.

Das Dekrementieren des Zeitraumes $t_H$ erfolgt dabei in jedem Falle so, daß der minimal mögliche Wert für den Zeitraum $t_H$ gleich null wird.

Das Dekrementieren des Zeitraumes $t_H$ kann dabei erfolgen, indem die Zeitdauer $t_H$ nach jedem Regelzyklus, bei dem eine Differenz $\mu$ oberhalb des Schwellwertes $SW_{\mu Ende}$ festgestellt wird, um einen festgelegten konstanten Wert verringert wird.

Alternativ kann das Dekrementieren des Zeitraumes $t_H$ in Abhängigkeit der Differenz $\mu_{Ende}$ am Ende des Regelzyklus erfolgen, wobei eine zunehmende Differenz $\mu_{Ende}$ einen zunehmenden Wert bedingt, um den der Zeitraum $t_H$ dekrementiert wird.

Unterschreitet die Differenz $\mu_{Ende}$ am Ende eines Regelzyklus den Schwellwert $SW_{\mu Ende}$ des vorhergehenden Regelzyklus, wird die Zeitdauer $t_H$ wieder inkrementiert. Dieses Inkrementieren kann erfolgen, indem die dekrementierte Zeitdauer $t_H$ sofort auf den Anfangswert der Zeitdauer $t_{H,Anfang}$ gesetzt wird. Alternativ kann das Inkrementieren auch erfolgen, indem die dekrementierte Zeitdauer $t_H$ am Ende eines jeden Regelzyklus, an dem die Differenz $\mu_{Ende}$ unterhalb des Schwellwertes $SW_{\mu Ende}$ des vorhergehenden Regelzyklus liegt, um einen vorzugsweise konstanten Betrag inkrementiert wird.

In einer besonders vorteilhaften Ausführungsform kann der Schwellwert $SW_{\mu Ende}$ mit zunehmender Häufigkeit des Dekrementierens der Zeitdauer $t_H$ am Ende aufeinander folgender Regelzyklen erhöht werden. Dadurch kann berücksichtigt werden, daß die Amplituden der Schwingungen beim Einschwingvorgang wahrend der Phase II des Regelzyklus gedämpft sind. Bei den ersten Schritten der Dekrementierung der Zeitdauer $t_H$ werden am Ende des Regelzyklus die geringeren Amplituden des Einschwingvorganges während der Phase II des Regelyzyklus abgeschnitten. Die größeren Amplituden des Einschwingvorganges werden dabei ggf. abgeschnitten, wenn die Dekrementierung der Zeitdauer $t_H$ so weit fortgeschritten ist, daß die Zeitdauer $t_H$ den Wert null erreicht. Die Motivation für eine Erhöhung des Schwellwertes $SW_{\mu Ende}$ mit zunehmender Häufigkeit der Dekrementierung ergibt sich somit aus der bereits dargelegten Zuordnung dieses Schwellwertes $SW_{\mu Ende}$ zu der Amplitude des Druckes beim Einschwingvorgang während der Phase II des Regelzyklus.

Alternativ zu der eben beschriebenen Vorgehensweise des Verkürzens der Zeitdauer $t_H$ kann die Zeitdauer $t_H$ bereits a priori auf ihren kleinstmöglichen Wert eingestellt werden, indem während der Phase II des Regelzyklus der Druckistwert $p_i$

zyklisch abgetastet und durch eine Tiefpaßfilterung ein Effektivwert ermittelt wird. Die Zeitdauer $t_H$ muß dann so gewählt werden, daß der Effektivwert dem Druckistwert entspricht, der sich einstellen würde, wenn die Phase II andauern würde bis die Einschwingvorgänge abgeklungen sind.

Es ist auch möglich, während der Phase I bzw. während der Phase II in den Regelzyklus einzugreifen. Dazu müssen der momentan anliegende Drucksollwert $p_s$ sowie der momentan anliegende Druckistwert $p_i$ erfaßt werden. Eine geeignete Abtastzeit beträgt dabei z.B. 1 msec.

Um während der Phase I des Regelzyklus auf Schwankungen des Drucksollwertes $p_s$ zu reagieren, wird in den Regelzyklus eingegriffen, wenn eine Änderung des Drucksollwertes $p_s$ oberhalb eines Schwellwertes $SW_\beta$ auftritt. Die Differenz $\beta$ der Drucksollwerte ergibt sich dabei durch Subtraktion des am Beginn des Regelzyklus anliegenden Drucksollwertes $p_{sin}$ von dem momentan anliegenden Drucksollwert $p_s$. Beim Auftreten einer Differenz $\beta$ oberhalb eines Schwellwertes $SW_\beta$ wird die Differenz $\mu$ errechnet.

Hat diese Differenz $\mu$ ein anderes Vorzeichen als die Differenz $\mu_{in}$ wird der Regelzyklus abgebrochen, indem sofort in die Phase II des Regelzyklus übergegangen wird, d.h. daß das Schaltventil sofort in den Zustand "Halten" geschaltet wird. Diese Phase II des Regelzyklus dauert dabei nur so lange an, daß das Schaltventil diesen Zustand gerade einstellen kann. Im Anschluß daran wird ein neuer Regelzyklus gestartet.

Hat diese Differenz $\mu$ dasselbe Vorzeichen wie die Differenz $\mu_{in}$, wird erneut die Zeitdauer $t_{ein}$ der Phase I berechnet, indem wie zu Beginn des Regelzyklus verfahren wird. Dabei wird der zu dem momentan anliegenden Sollwert $p_s$ gehörende Zeitpunkt $t_2$ ermittelt. Von der neu ermittelten Zeitdauer $t_{ein}$ der Phase I wird die bereits abgelaufene Zeitdauer der Phase I bis zum Überschreiten des Schwellwertes $SW_\beta$ durch die Differenz $\beta$ abgezogen. Für die dann verbleibende Zeitdauer wird das Schaltventil in dem der Phase I entsprechenden Schaltzustand belassen. Für die weitere Behandlung dieses Regelzyklus wird der Drucksollwert $p_{sin}$ am Beginn des Regelzyklus so behandelt, als hätte am Beginn des Regelzyklus gleich der momentan anliegende Drucksollwert $p_s$ angelegen.

Unabhängig von der Größe einer eventuell auftretenden Sollwertanderung $\beta$ erfolgt ein sofortiger Übergang in die Phase II des Regelzyklus, d.h. es wird der Zustand "Halten" ausgegeben, wenn die Differenz $\mu$ ein anderes Vorzeichen aufweist als die Differenz $\mu_{last}$ an dem letzten Abtastzeitpunkt.

Während der Phase II eines Regelzyklus kann in besonders vorteilhafter Weise auf eine deutliche Änderung des Drucksollwertes $p_s$ eingegangen werden, wenn die Phase II verkürzt wird bei einer

Differenz $\mu$ oberhalb eines Schwellwertes $SW_{\mu II}$. Es ist dabei möglich, sofort mit einem neuen Regelzyklus zu beginnen oder aber die Phase II des Regelzyklus zu verkürzen.

Das Verkürzen der Phase II des Regelzyklus geschieht dabei wiederum in einer vorteilhaften Ausführungsform in Abhängigkeit von der Differenz $\mu$, wobei eine zunehmende Differenz $\mu$ eine zunehmende Verkürzung der Phase II des Regelzyklus bedingt. Alternativ kann die Phase II des Regelzyklus auch um einen konstanten Betrag verkürzt werden.

Ein Ausführungsbeispiel der Erfindung ist in der Zeichnung schematisch dargestellt und wird im folgenden näher beschrieben. Es zeigen:

Fig. 1: eine Kennlinie des Druckes über der Zeit bei dem Schaltzustand "Belüften" des Schaltventiles,

Fig. 2: eine Kennlinie des Druckes über der Zeit bei dem Schaltzustand "Entlüften" des Schaltventiles und

Fig. 3: ein Ablaufdiagramm einer Ausführungsform des erfindungsgemäßen Verfahrens.

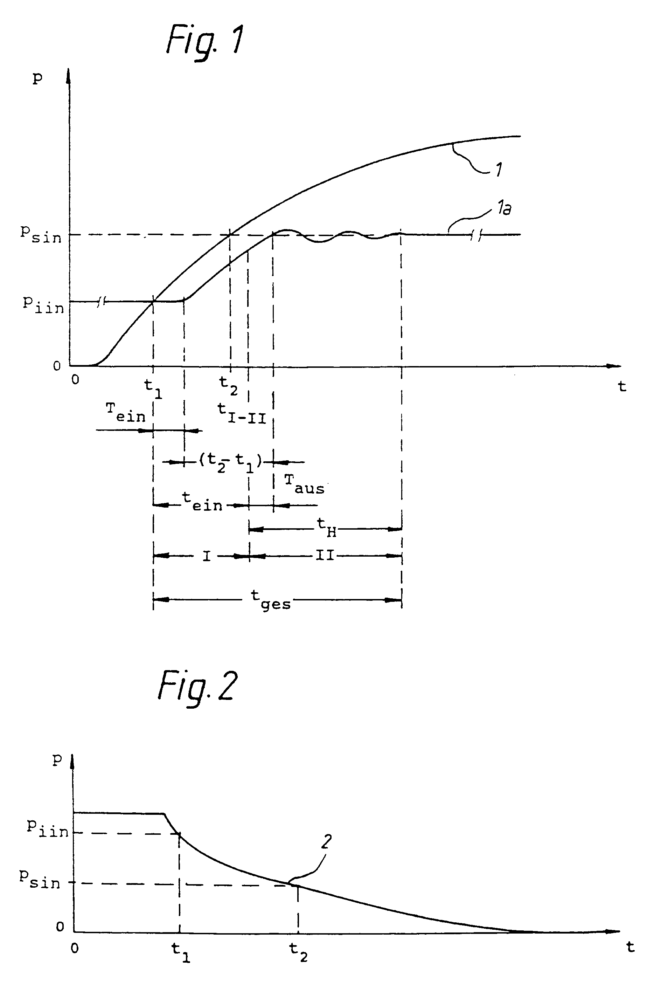

Eine Darstellung der Kennlinie 1 des Druckes über der Zeit bei dem Schaltzustand "Belüften" des Schaltventiles ist in der Fig. 1 gegeben. Der Verlauf dieser Kennlinie 1 unterliegt Änderungen mit der Zeit beispielsweise aufgrund von der sich ändernden Temperatur oder Alterserscheinungen des Schaltventiles. Außerdem unterliegt die Kennlinie 1 bei einem Bremssystem fahrzeugspezifischen Gegebenheiten wie z.B. den Leitungslängen oder den Zylindervolumina der Bauteile des Bremssytems. Deswegen kann diese Kennlinie in einer vorteilhaften Ausführungsform des erfindungsgemäßen Verfahrens bei einem druckneutralen Zustand erneut aufgenommen werden. Dieser druckneutrale Zustand kann beispielsweise dann bestehen, wenn die Fahrzeuggeschwindigkeit $v_F$ gleich null ist.

Außerdem ist in der Fig. 1 der zeitliche Verlauf des Druckes bei einem Regelzyklus durch die Kurve 1a gegeben. Der Druckistwert $p_i$ soll von seinem Anfangswert $p_{iin}$ innerhalb eines Regelzyklus auf den Drucksollwert $p_{sin}$ nachgeführt werden. Zu Beginn der Einschaltdauer $t_{ein}$ während der Phase I des Regelzyklus erfolgt während der Einschalttotzeit des Schaltventiles zunächst keine Änderung des Druckes. Anschließend steigt der Druck im wesentlichen dem Verlauf der Kennlinie folgend an. Zu dem Zeitpunkt $t_{I-II}$ ist die Zeitdauer $t_{ein}$ abgelaufen, d.h. daß das Schaltventil umgeschaltet wird. Während der Phase II des Regelzyklus erfolgt wegen der Abschalttotzeit des Schaltventiles zunächst ein weiterer Druckanstieg während der Abschalttotzeit $T_{aus}$. Die Zeitdauer $t_H$ der Phase II des Regelzyklus wird dabei so gewählt, daß Einschwingvorgänge des Druckes am Ende des Regelzyklus abgeklungen sind. Der Druckistwert $p_i$ hat dann den am Beginn des Regelzyklus anliegenden Drucksollwert $p_{sin}$ erreicht.

Analog den Verhältnissen beim Schaltzustand "Belüften" ist eine Kennlinie 2 des Verlaufes des Druckes über der Zeit bei dem Schaltzustand "Entlüften" in der Fig. 2 gegeben. Auch diese Kennlinie 2 kann in einer vorteilhaften Ausführungsform wiederholt aufgenommen werden, wie dies bereits bei der Beschreibung der Fig. 1 (Kennlinie 1) dargelegt wurde.

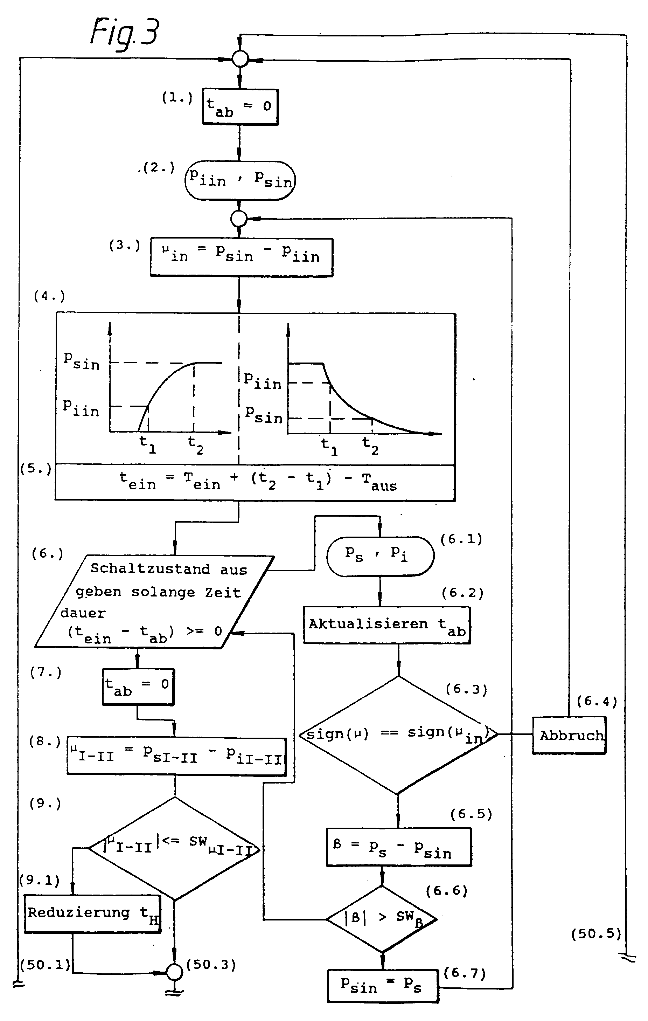

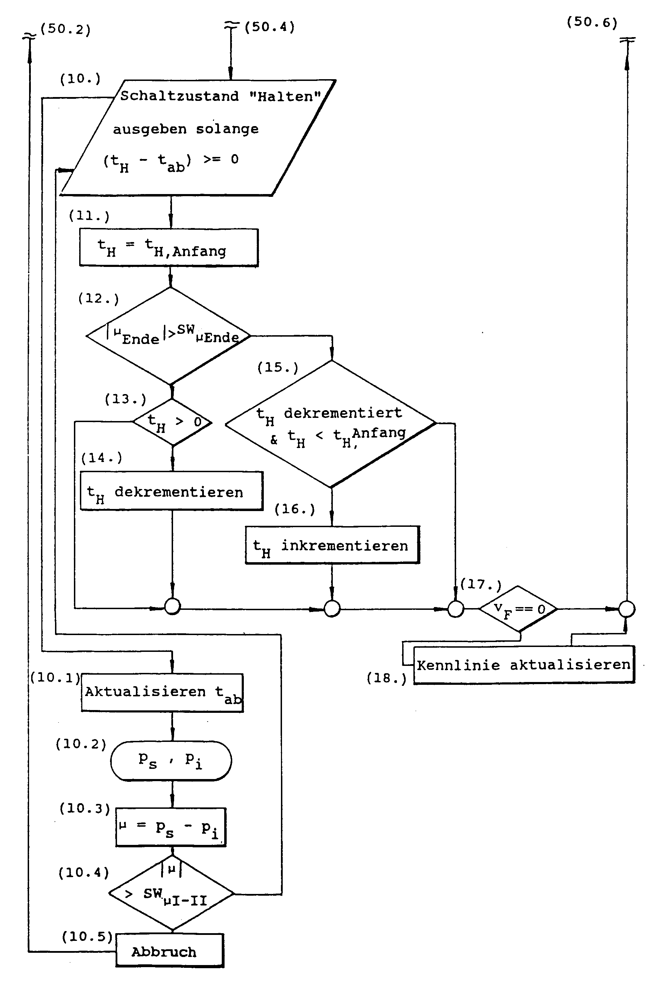

In Fig. 3 ist ein Ablaufdiagramm des erfindungsgemäßen Verfahrens dargestellt. Da die Einschaltzeit a priori ermittelt wird, muß eine Möglichkeit des Vergleiches mit der abgelaufenen Zeit bzgl. des Einschaltvorganges $t_{ab}$ gegeben sein. Zu Beginn eines Regelzyklus wird daher die abgelaufene Zeit bzgl. des Einschaltvorganges $t_{ab}$ in einem ersten Ablaufschritt (1.) auf null gesetzt. Anschließend wird aus dem zu Beginn des Regelzyklus anliegenden Druckistwert $p_{iin}$ und dem zu Beginn des Regelzyklus anliegenden Drucksollwert $p_{sin}$ anhand der Kennlinien 1, 2 in dem Ablaufschritt (4.) eine Einschaltzeit $t_1$ und eine Ausschaltzeit $t_2$ ermittelt. Die Kennlinie 1 entspricht dabei dem Schaltzustand "Belüften" und die Kennlinie 2 entspricht dem Schaltzustand "Entlüften". Aus der Differenz $(t_2 - t_1)$ sowie den Totzeiten $T_{ein}$ und $T_{aus}$ beim Ein- und Ausschalten des Schaltventiles wird in dem Ablaufschritt (5.) die Einschaltdauer $t_{ein}$ des Schaltventiles bestimmt. Anschließend wird das Schaltventil auf den entsprechenden Zustand "Be-" bzw. "Entlüften" geschaltet. Dabei wird die a priori ermittelte Einschaltdauer $t_{ein}$ in dem Ablaufschritt (6.) verglichen mit der abgelaufenen Zeit bzgl. des Einschaltvorganges $t_{ab}$. In vorteilhafter Weise kann dabei besonders schnell auf deutliche Sollwertschwankungen reagiert werden, indem der aktuelle Drucksollwert $p_s$ sowie der aktuelle Druckistwert $p_i$ in dem Ablaufschritt (6.1) zyklisch abgetastet werden. Außerdem wird bei jedem Abtastzeitpunkt die abgelaufene Zeit bzgl. des Einschaltvorganges $t_{ab}$ in dem Ablaufschritt (6.2) bestimmt. Aus diesem Drucksollwert $p_s$ und dem aktuellen Druckistwert $p_i$ wird die Differenz $\mu$ errechnet. In dem folgenden Ablaufschritt (6.3) wird das Vorzeichen der Differenz $\mu$ mit dem Vorzeichen der Differenz $\mu_{in}$ verglichen. Hat diese Differenz $\mu$ ein anderes Vorzeichen als die Differenz $\mu_{in}$ am Beginn des Regelzyklus, erfolgt ein Übergang zu dem Ablaufschritt (6.4), in dem der aktuelle Regelzyklus abgebrochen wird. Außerdem wird der Drucksollwert $p_s$ verglichen mit dem Drucksollwert $p_{sin}$ am Beginn des Regelzyklus, indem der am Beginn des Regelzyklus anliegende Drucksollwert $p_{sin}$ von dem aktuellen Drucksollwert $p_s$ in dem Ablaufschritt (6.5) subtrahiert wird. In dem Ablaufschritt (6.6) wird geprüft, ob die Differenz $\beta$ dieser beiden Sollwerte betrags-

mäßig einen vorgegebenen Schwellwert $SW_\beta$ übersteigt. Trifft dies zu, wird so verfahren, als ob der aktuelle Drucksollwert $p_s$ bereits am Beginn des Regelzyklus angelegen hätte. Es wird eine neue Einschaltdauer $t_{ein}$ ermittelt, indem zunächst in dem Ablaufschritt (6.7) der Drucksollwert $p_{sin}$ am Beginn des Regelzyklus gleich dem aktuellen Drucksollwert $p_s$ gesetzt wird. Das Schaltventil wird für eine der neu ermittelten Einschaltdauer $t_{ein}$ entsprechenden Zeitdauer auf dem entsprechenden Schaltzustand belassen. Bei dieser neu ermittelten Einschaltdauer $t_{ein}$ wird die bereits abgelaufene Zeitdauer bzgl. des Einschaltvorganges $t_{ab}$ berücksichtigt. Anschließend wird in dem Ablaufschritt (7.) die bzgl. des Schaltzustandes abgelaufene Zeit $t_{ab}$ normiert.

Außerdem wird am Übergang der Phase I des Regelzyklus (Schaltzustand "Be-" bzw. "Entlüften" des Schaltventiles) zur Phase II des Regelzyklus (Schaltzustand "Halten") die aktuelle Differenz $\mu_{I-II}$ in dem Ablaufschritt (8.) ermittelt. Bei einem betragsmäßigen Überschreiten eines Schwellwertes $SW_{\mu I-II}$ dieser Differenz $\mu$ - festgestellt in dem Ablaufschritt (9.) - kann die Zeitdauer $t_H$ der folgenden Phase II des Regelzyklus in dem Ablaufschritt (9.1) reduziert werden. Diese Reduktion ist nur gültig für den aktuellen Regelzyklus. Die Reduktion der Zeitdauer $t_H$ kann dabei um eine konstante Zeitdauer erfolgen. Alternativ ist es auch möglich, die Zeitdauer $t_H$ um eine Zeitdauer zu reduzieren, deren Größe abhängt von dem Betrag der Differenz $\mu_{I-II}$, wobei eine Zunahme der Differenz $\mu_{I-II}$ eine Zunahme der Zeitdauer bedingt, um die die Zeitdauer $t_H$ reduziert wird.

An dieser Stelle ist das Ablaufdiagramm aus Platzgründen unterbrochen, die Fortsetzung folgt auf der nächsten Seite der Zeichnung. Dabei erfährt die Linie (50.1) ihre Fortsetzung durch die Linie (50.2), wobei die Richtung von unten nach oben ist, die Linie (50.3) erfährt ihre Fortsetzung in der Linie (50.4), wobei die Richtung von oben nach unten ist und die Linie (50.5) erfährt ihre Fortsetzung in der Linie (50.6), wobei die Richtung von unten nach oben ist.

Für eine Zeitdauer $t_H$ wird dann das Schaltventil während der Phase II des Regelzyklus in den Schaltzustand "Halten" geschaltet, wie in dem Ablaufschritt (10.) dargestellt. Auch wahrend dieser Phase des Regelzyklus kann in besonders vorteilhafter Weise auf eine starke Änderung des Drucksollwertes $p_s$ reagiert werden, indem in dem Ablaufschritt (10.4) geprüft wird, ob die Differenz $\mu$ betragsmäßig einen Schwellwert $SW_{\mu II}$ überschreitet. Trifft dies zu, erfolgt ein Übergang zu dem Ablaufschritt (10.5), in dem ein Abbruch dieses Regelzyklus erfolgt.

Am Ende des Regelzyklus wird in einer vorteilhaften Ausführungsform des erfindungsgemäßen Verfahrens die Differenz $\mu_{Ende}$ mit einem Schwellwert $SW_{\mu Ende}$ verglichen, wie in dem Ablaufschritt (12.) dargestellt. Überschreitet die Differenz $\mu_{Ende}$ betragsmäßig diesen Schwellwert $SW_{\mu Ende}$, wird auf zeitlich schnelle Sollwertänderungen geschlossen. Bei den nächsten Regelzyklen kann in vorteilhafter Weise auf diese zeitlich schnellen Sollwertänderungen reagiert werden, indem die Zeitdauer $t_H$ der Phase II der Regelzyklen dekrementiert wird - entsprechend dem Ablaufschritt (14.). Dieses Dekrementieren erfolgt dabei maximal so weit, daß die Zeitdauer $t_H$ den Wert null erreicht. Deshalb erfolgt der Ablaufschritt (13.) vor dem Dekrementieren. Bei zunehmender Häufigkeit des Dekrementierens der Zeitdauer $t_H$ am Ende eines Regelzyklus in unmittelbarer Folge kann in besonders vorteilhafter Weise der Schwellwert $SW_{\mu Ende}$ inkrementiert werden. Ist die Differenz $\mu_{Ende}$ kleiner als der Schwellwert $SW_{\mu Ende}$ des vorhergehenden Regelzyklus, wird die Zeitdauer $t_H$ inkrementiert bis zu dem Anfangswert $t_{H,Anfang}$ - entsprechend dem Ablaufschritt (16.), wenn die Zeitdauer vorher dekrementiert wurde, was in dem Ablaufschritt (15.) abgefragt wird. Das Dekrementieren der Zeitdauer $t_H$ kann dabei erfolgen, indem die Zeitdauer $t_H$ um einen konstanten Wert dekrementiert wird. Alternativ ist es möglich, die Zeitdauer $t_H$ in Abhängigkeit von dem Betrag der Differenz $\mu_{Ende}$ zu dekrementieren, wobei eine betragsmäßig zunehmende Differenz $\mu_{Ende}$ einen zunehmenden Wert bedingt, um den die Zeitdauer $t_H$ dekrementiert wird. Die Inkrementierung der Zeitdauer $t_H$ kann erfolgen, indem die Zeitdauer $t_H$ um einen konstanten Betrag inkrementiert wird. Alternativ ist es auch möglich, eine dekrementierte Zeitdauer $t_H$ in einem Schritt auf den Anfangswert $t_{H,Anfang}$ zurückzusetzen.

Bevor nach diesem ordnungsgemäßen Ende eines Regelzyklus ein neuer Regelzyklus startet, können in dem Ablaufschritt (18.) die Kennlinien 1,2 erneut aufgenommen werden, um Veränderungen der Kennlinien 1,2 beispielsweise aufgrund von Alterungserscheinungen ausgleichen zu können. Der Zustand, in dem die Kennlinien 1,2 erneut aufgenommen werden können, muß dabei ein druckneutraler Zustand sein. Dieser Zustand kann beispielsweise wie in dem Ablaufschritt (17.) dargestellt aus der Bedingung abgeleitet werden, daß die Fahrzeuggeschwindigkeit $v_F$ gleich null ist.

## Patentansprüche

1. Verfahren zur Regelung des Druckes, insbesondere in einer Bremsanlage eines Fahrzeuges,

- wobei der Druckistwert gemessen wird,
- wobei die Differenz $\mu$ durch Subtraktion des Druckistwertes $P_i$ von dem Drucksollwert $P_s$ gebildet wird,

- wobei ein druckeinstellendes Schaltventil von einer der Stellungen "Be-" bzw. "Entlüften" auf die Haltestellung umgeschaltet wird und umgekehrt,
- wobei der zeitliche Verlauf des Druckistwertes $P_i$ bei den Zuständen des Schaltventiles "Be-" und "Entlüften" aufgenommen und in Kennlinien abgelegt ist,
- wobei ein Regelzyklus beginnt, indem unter Verwendung des Druckistwertes $P_{iin}$ am Beginn des Regelzyklus und seiner Differenz $\mu_{in}$ zum Drucksollwert $P_{sin}$ am Beginn des Regelzyklus aus den Kennlinien a priori eine Einschaltdauer $t_{ein}$ für das Schaltventil ermittelt wird,
    - wobei die Kennlinie 1 für den Zustand "Belüften" des Schaltventiles verwendet wird, wenn die Differenz $\mu_{in}$ größer als 0 ist und
    - wobei die Kennlinie 2 für den Zustand "Entlüften" des Schaltventiles verwendet wird, wenn die Differenz Hin kleiner als 0 ist,
- indem aus der entsprechenden Kennlinie (1, 2) eine Zuordnung des Drucksollwertes $P_{sin}$ am Beginn des Regelzyklus zu einer Ausschaltzeit $t_2$ sowie eine Zuordnung des Druckistwertes $P_{iin}$ zu einer Einschaltzeit $t_1$ durchgeführt und aus der Differenz der Ausschalzeit $t_2$ und der Einschaltzeit $t_1$ die Einschaltdauer $t_{ein}$ bestimmt wird,

**dadurch gekennzeichnet,**

- daß bei der Bestimmung der Einschaltdauer $t_{ein}$ weiterhin die Totzeiten $T_{ein}$, $T_{aus}$ beim Ein- und Ausschalten des Schaltventiles berücksichtigt werden, wobei die Totzeit $T_{ein}$ die kleinste Einschaltdauer des Schaltventiles ist, bei der noch eine Druckänderung stattfindet und wobei die Totzeit $T_{aus}$ die sich aufgrund des Schaltventiles ergebende Abschalttotzeit des Schaltventiles ist, wobei dann die Bestimmung nach der Formel erfolgt:

$$t_{ein} = T_{ein} + (t_2 - t_1) - T_{aus'}$$

- daß das Schaltventil in einer Phase I des Regelzyklus für eine der Einschaltdauer $t_{ein}$ entsprechenden Zeitdauer auf den der Kennlinie (1, 2) entsprechenden Zustand "Be-" bzw. "Entlüften" geschaltet wird,
- daß im Anschluß an die Phase I des Regelzyklus in einer Phase II des Regelzyklus für eine bestimmte Zeitdauer $t_H$ das Schaltventil in den Zustand "Halten" geschaltet wird,

- daß die Summe der Einschaltdauer $t_{ein}$ und der Zeitdauer $t_H$ der beiden Phasen I und II des Regelzyklus eine Zeitdauer $t_{ges}$ ergibt und
- daß nach Ablauf der Zeitdauer $t_{ges}$ erneut ein Regelzyklus beginnt.

2.  Verfahren nach Anspruch 1,
    **dadurch gekennzeichnet,**
    daß die Zeitdauer $t_H$ der Phase II des Regelzyklus so bestimmt wird, daß Einschwingvorgänge des Druckes nach der Umschaltung des Schaltventiles in den Zustand "Halten" abgeklungen sind, bevor ein erneuter Regelzyklus beginnt.

3.  Verfahren nach Anspruch 1,
    **dadurch gekennzeichnet,**
    daß während der Phase II des Regelzyklus der Druckistwert $p_i$ zyklisch abgetastet und mittels einer Tiefpaßfilterung ein Effektivwert ermittelt wird, wobei die Zeitdauer $t_H$ so bestimmt wird, daß der Effektivwert im wesentlichen dem Druckistwert $p_i$ im eingeschwungenen Zustand entspricht.

4.  Verfahren nach Anspruch 1,
    **dadurch gekennzeichnet,**
    daß die Zeitdauer $t_H$ ausgehend von einem Anfangswert $t_{H,Anfang}$ für künftige Regelzyklen um einen bestimmten Wert dekrementiert wird, wenn am Ende eines Regelzyklus eine Differenz $\mu_{Ende}$ oberhalb eines Schwellwertes $SW_{\mu Ende}$ festgestellt wird, wobei keine weitere Dekrementierung erfolgt, wenn die Zeitdauer $t_H$ den Wert 0 erreicht hat.

5.  Verfahren nach Anspruch 4,
    **dadurch gekennzeichnet,**
    daß der Schwellwert $SW_{\mu Ende}$ vergrößert wird bei zunehmender Häufigkeit der Dekrementierung der Zeitdauer $t_H$.

6.  Verfahren nach Anspruch 4 oder 5,
    **dadurch gekennzeichnet,**
    daß bei einer Differenz $\mu_{Ende}$ kleiner als der Schwellwert $SW_{\mu Ende}$ am Ende des vorhergehenden Regelzyklus eine vorher dekrementierte Zeitdauer $t_H$ auf den Anfangswert der Zeitdauer $t_{H,Anfang}$ zurück gesetzt wird.

7.  Verfahren nach Anspruch 4 oder 5,
    **dadurch gekennzeichnet,**
    daß bei einer Differenz $\mu_{Ende}$ kleiner als der Schwellwert $SW_{\mu Ende}$ am Ende des vorhergehenden Regelzyklus eine vorher dekrementierte Zeitdauer $t_H$ um einen konstanten Betrag inkrementiert wird, wobei keine weitere Inkrementierung erfolgt, wenn die Zeitdauer $t_H$ den Anfangswert der Zeitdauer $t_{H,Anfang}$ erreicht hat.

**8.** Verfahren nach einem der Ansprüche 4 bis 7,
**dadurch gekennzeichnet,**
daß der Wert, um den die Zeitddauer $t_H$ dekrementiert wird, konstant ist.

**9.** Verfahren nach einem der Ansprüche 4 bis 7,
**dadurch gekennzeichnet,**
daß der Wert, um den die Zeitdauer $t_H$ dekrementiert wird, mit einer vorgegebenen funktionalen Abhängigkeit von der Differenz $\mu_{Ende}$ abhängt, wobei eine betragsmäßig zunehmende Differenz $\mu_{Ende}$ eine Zunahme des Wertes bewirkt.

**10.** Verfahren nach einem der Ansprüche 1 bis 9,
**dadurch gekennzeichnet,**
daß wahrend der Phase I des Regelzyklus
- der momentan anliegende Drucksollwert $p_s$ und der momentan anliegende Druckistwert $p_i$ zyklisch abgetastet werden,
- geprüft wird, ob die Differenz $\mu$ ein anderes Vorzeichen aufweist als die Differenz $\mu_{in}$ am Beginn des Regelzyklus,
  - wobei bei einem unterschiedlichen Vorzeichen der Differenz $\mu$ zur Differenz $\mu_{in}$ ein Abbruch des Regelzyklus erfolgt,
    - indem das Schaltventil zeitlich derart begrenzt in den Zustand "Halten" schaltet, daß das Schaltventil diesen Zustand gerade einstellen kann und
    - indem dann ein neuer Regelzyklus startet,
- die Differenz $\beta$ gebildet wird, indem von dem momentan anliegenden Drucksollwert $p_s$ der am Beginn des Regelzyklus anliegende Drucksollwert $p_{sin}$ subtrahiert wird,
- bei einem betragsmaßigen Überschreiten eines Schwellwertes $SW_\beta$ der Differenz $\beta$ die Einschaltdauer $t_{ein}$ neu bestimmt wird,
- indem zu dem momentan anliegenden Drucksollwert $p_s$ die Ausschaltzeit $t_2$ neu bestimmt wird,
- indem mit den am Beginn des Regelzyklus geltenden Parametern $t_1$, $T_{ein}$, $T_{aus}$ eine neue Einschaltdauer $t_{ein}$ für die Phase I des Regelzyklus bestimmt wird,
- indem die bereits abgelaufene Zeitdauer der Einschaltdauer $t_{ein}$ von der neu ermittelten Einschaltdauer $t_{ein}$ subtrahiert wird zur Bestimmung der restlichen Einschaltdauer $t_{ein,Rest}$ und

- indem das Schaltventil für eine der restlichen Einschaltdauer $t_{ein,Rest}$ in dem der Phase I des Regelzyklus entsprechenden Schaltzustand belassen wird, woran sich dann die Phase II des ursprünglichen Regelzyklus anschließt.

**11.** Verfahren nach einem der Ansprüche 1 bis 10,
**dadurch gekennzeichnet,**
daß während der Phase I eines Regelzyklus
- der momentan anliegende Drucksollwert $p_s$ und der Druckistwert $p_i$ zyklisch abgetastet werden,
- aus diesen beiden Größen die Differenz $\mu$ gebildet wird,
- die sich aus den Werten des aktuellen Abtastschrittes ergebende Differenz u mit der sich aus den Werten des vorhergehenden Abtastschrittes ergebenden Differenz $\mu_{last}$ verglichen wird,
- bei einem unterschiedlichen Vorzeichen der Differenzen $\mu$ und $\mu_{last}$ ein Abbruch des Regelzyklus erfolgt, indem das Schaltventil zeitlich derart begrenzt in den Zustand "Halten" schaltet, daß das Schaltventil diesen Zustand gerade einstellen kann, und
- am Ende der zeitlich reduzierten Phase II des Regelzyklus ein neuer Regelzyklus startet.

**12.** Verfahren nach einem der Ansprüche 1 bis 11,
**dadurch gekennzeichnet,**
daß bei dem Übergang I-II von der Phase I zur Phase II eines Regelzyklus
- die Differenz $\mu_{I-II}$ gebildet wird durch Subtraktion des Druckistwertes $p_{iI-II}$ von dem Drucksollwert $p_{sI-II}$ und
- bei einem betragsmäßigen Überschreiten eines Schwellwertes $SW_{\mu I-II}$ der Differenz $\mu_{I-II}$ eine Reduzierung der Zeitdauer $t_H$ für diesen Regelzyklus erfolgt.

**13.** Verfahren nach Anspruch 12,
**dadurch gekennzeichnet,**
daß die Reduzierung der Zeitdauer $t_H$ um eine konstante Zeitdauer erfolgt.

**14.** Verfahren nach Anspruch 13,
**dadurch gekennzeichnet,**
daß die Reduzierung der Zeitdauer $t_H$ in Abhängigkeit der Differenz $\mu_{I-II}$ erfolgt, wobei die Reduzierung der Zeitdauer $t_H$ mit zunehmender Differenz $\mu_{I-II}$ zunimmt.

**15.** Verfahren nach einem der Ansprüche 1 bis 14,
**dadurch gekennzeichnet,**
daß während der Phase II eines Regelzyklus

- der momentan anliegende Drucksollwert $p_s$ und der Druckistwert $p_i$ zyklisch abgetastet werden,
- aus diesen beiden Größen die Differenz $\mu$ gebildet wird und
- bei betragsmäßigem Überschreiten eines Schwellwertes $SW_{\mu II}$ der Differenz $\mu$ ein Abbruch des Regelzyklus erfolgt, indem das Schaltventil zeitlich derart begrenzt in den Zustand "Halten" schaltet, daß das Schaltventil diesen Zustand gerade einstellen kann, und
- am Ende der zeitlich reduzierten Phase II des Regelzyklus ein neuer Regelzyklus startet.

16. Verfahren nach einem der Ansprüche 1 bis 15, **dadurch gekennzeichnet,**
daß die Kennlinien (1, 2) in bestimmten Zeitabständen bei einem druckneutralen Zustand wiederholt aufgenommen werden, wobei die Zeitabstände so bemessen sind, daß Verschleiß- sowie Betriebspunktabhängigkeiten der Kennlinien (1, 2) bei der Durchführung des Verfahrens ausgeglichen werden.

17. Verfahren nach Anspruch 16, **dadurch gekennzeichnet,**
daß der druckneutrale Zustand bei einem Fahrzeug aus der Bedingung abgeleitet wird, daß die Fahrzeuggeschwindigkeit $v_F$ gleich null sein muß.

**Claims**

1. A method of regulating the pressure, particularly in a braking system of a vehicle,
    - in which the actual pressure is measured,
    - the difference $\mu$ being formed by subtraction of the actual pressure $P_i$ from the desired pressure $P_s$,
    - whereby a pressure adjusting switching valve is switched from one of the positions "Application of" or "removal of" air pressure to the "Hold" position and vice versa,
    - whereby the time-related pattern of the actual pressure $P_i$ for the conditions of the switching valve "pressure applying or relieving" is recorded and broken down into characteristic lines,
    - whereby a control cycle commences in which, by using the actual value $P_{iin}$ at the commencement of the control cycle and of its difference $\mu_{in}$ in relation to the desired pressure $P_{sin}$ at the commencement of the control cycle is ascertained from the characteristic curves a *priori* a connected duration $t_{on}$ is ascertained for the switching valve,
    - whereby the characteristic curve 1 is used for the condition "application of pressure" to the switching valve if the differential $\mu_{in}$ is greater than 0 and
    - whereby the characteristic curve 2 is used for the condition "pressure of removal" from the switching valve if the differential $\mu_{in}$ is less than 0,
    - in that from the corresponding characteristic curve (1, 2) a correlation of the desired pressure value $P_{sin}$ at the commencement of the control cycle to a switch-off time $t_2$ and a correlation of the actual pressure $P_{iin}$ to a connected time $t_1$ is carried out and the duration of connection $t_{on}$ is determined from the difference between the disconnection time $t_2$ and the connection time $t_1$ so the duration of connection $t_{on}$ is determined,
characterised in that
    - when determining the connection time $t_{on}$, furthermore the dead times $T_{on}$, $T_{off}$ are taken into account when switching the switching valve on and off, whereby the dead time $T_{on}$ is the minimum connection duration of the switching valve in which also a change in pressure occurs and whereby the dead time $T_{off}$ is the disconnection dead time of the switching valve which arises from the switching valve whereby then determination takes place in accordance with the formula:

$$t_{on} = T_{on} + (t_2 - t_1) - T_{off},$$

    - and in that in a phase I of the control cycle the switching valve is connected for a period of time corresponding to the connection time $t_{on}$ to the "pressure connected or relieved" corresponding to the characteristic curve (1, 2), and in that
    - following the phase I of the control cycle, in a phase II of the control cycle, and for a specific period of time tH, the switching valve is switched to the "Hold" condition, and in that
    - the sum of the connected time ton and the period $t_H$ of the two phases I and II of the control cycle, a time lapse $t_{tot}$ results,
    - upon expiry of the time $t_{tot}$, another control cycle commences.

2. A method according to claim 1, characterised in that the duration $t_H$ of the phase II of the control cycle is so determined that after the switching valve has been switched over to the "Hold" condition, the pressure build-up processes abate before a fresh control cycle commences.

3.  A method according to claim 1, characterised in that the actual pressure $p_i$ is cyclically scanned during phase II of the control cycle and an effective value is ascertained by means of a low = pass filter, the duration $t_H$ being so determined that the effective value corresponds substantially to the actual pressure $p_i$ in the engaged state.

4.  A method according to claim 1, characterised in that on a basis of an initial value $t_H$,comm for future control cycles the dureation is decreased by a specific amount if it is found at the end of a control cycle that there is a differential $\mu_{end}$ above a threshold value $SW_{\mu end}$, no further decreasing occurring when the time $t_H$ has reached the value O.

5.  A method according to claim 4, characterised in that the threshold value $SW_{\mu end}$ is increased with increasing frequency of the decreasing of the duration $t_H$.

6.  A method according to claim 4 or 5, characterised in that for a differential $\mu_{end}$ less than the threshold value $SW_{\mu end}$ at the end of the preceding control cycle a previously diminished duration $t_H$ is set back to the initial value of the duration $t_{H,comm}$.

7.  A method according to claim 4 or 5, characterised in that for a differential $\mu_{end}$ which is less than the threshold value $SW_{\mu end}$ at the end of a preceding control cycle a previously decreased duration $t_H$ is increased by a constant amount, no further incrementation taking place when the duration $t_H$ has reached the initial value corresponding to the duration $t_{H,comm}$.

8.  A method according to one of claims 4 to 7, characterised in that the value by which the duration $t_H$ is decreased is constant.

9.  A method according to one of claims 4 to 7, characterised in that the value by which the duration $t_H$ is decreased depends upon the differential $\mu_{end}$ with a predetermined functional dependency, a differential $\mu_{end}$ which increases according to the amount producing an increase in the value.

10. A method according to one of claims 1 to 9, characterised in that during phase I of the control cycle the desired pressure $p_s$ applied at any given moment and the actual pressure $p_i$ available at any given time is cyclically scanned, and
    - it is tested whether the differential $\mu$ has a different sign from the differential $\mu_{in}$ at the start of the control cycle,
        - whereby in the case of a different sign for the differential $\mu$ in relation to the differential $\mu_{in}$, the control cycle is broken off,
            - in that the switching valve is so limited in time that it switches into the "Hold" state and in that the switching valve is able to set this state precisely and
            - in that a new control cycle is then started,
    - the differential $\beta$ is formed in that the desired pressure $p_{sin}$ present at the commencement of the control cycle is subtracted from whichever desired pressure value $p_s$ is being applied at the time,
    - in the case of one threshold value $SW_\beta$ exceeding by amount the differential $\beta$, the connection time $t_{off}$ is redetermined, in that in relation to whatever desired pressure $p_s$ is currently available, the switch off time $t_2$ is determined afresh,
    - in that with the parameters $t_1$, $T_{on}$, $T_{off}$ which are valid at the start of the control cycle, a new connection time $t_{on}$ for phase I of the control cycle is determined,
    - in that the already expired periods for connection time $t_{on}$ is subtracted from the newly ascertained connection time $t_{on}$ in order to determine the remaining connection time $t_{on,rem}$, and
    - in that the switching valve is left in a switched condition corresponding to the remaining connection time $t_{on,rem}$ corresponding to phase I of the control cycle, following which there is then there the phase II of the original control cycle.

11. A method according to one of claims 1 to 10, characterised in that during phase I of a control cycle
    - the desired pressure $p_s$ currently applied and the actual pressure $p_i$ are cyclically scanned,
    - the differential $\mu$ being formed from these two values, the differential $\mu$ resulting from the values of the current scanning step being compared with the dif-

ferential $\mu_{last}$ arising from the values of the preceding scanning step and

- in that for a different sign preceding the differentials $\mu$ and $\mu_{last}$ there is a discontinuance of the control cycle in that the switching valve is so limited with regard to its timing when it enters the "Hold" state that the switching valve is able to set this condition, and
- starts a new control cycle at the end of the timewisely reduced phase II of the control cycle.

12. A method according to one of claims 1 to 11, characterised in that during the transition I-II from phase I to phase II of a control cycle
    - the differential $\mu_{I-II}$ is formed by subtraction of the actual pressure $p_{iI-II}$ from the desired pressure $p_{sI-II}$ and if a threshold value $SW_{\mu I-II}$ of the differential $_{\mu I-II}$ is exceeded in its amount, there is a reduction in the duration of the time $t_H$ for this control cycle.

13. A method according to claim 12, characterised in that the time duration $t_H$ is reduced by a constant duration.

14. A method according to claim 13, characterised in that the time duration $t_H$ is reduced as a function of the differential $\mu_{I-II}$, the reduction in the time period $t_H$ increasing with increasing differential $\mu_{I-II}$

15. A method according to one of claims 1 to 14, characterised in that during phase II of a control cycle
    - the desired pressure $p_s$ applied at that moment and the actual pressure $p_i$ are cyclically scanned, the differential $\mu$ being formed from these two values, and
    - if a threshold value $SW_{\mu II}$ of the differential $\mu$ is exceeded by an amount, the control cycle is broken off in that the switching valve is so switched for a limited extent into the "Hold" state that the switching valve is able to adjust to this state, and
    - starts a new control cycle at the end of the timewisely reduced phase II of the control cycle.

16. A method according to one of claims 1 to 15, characterised in that the characteristics (1, 2) at specific intervals of time are recorded repeatedly for a neutral-pressure condition whereby the time intervals are so dimensioned that wear and tear and operating point-dependencies of the characteristic curves (1, 2) are compensated for when the method is carried out.

17. A method according to claim to 16, characterised in that in the case of a vehicle the pressure-neutral state is derived from the condition that the vehicle speed $v_F$ must be equal to nil.

## Revendications

1. Procédé de régulation de pression, en particulier dans une installation de freinage d'un véhicule, dans laquelle
    - on mesure la valeur réelle de la pression,
    - on forme la différence $\mu$ en soustrayant la valeur réelle de pression $P_i$ de la valeur de consigne de pression $P_s$,
    - on commute une soupape de commutation de réglage de pression, pour la faire passer de l'une des positions "aérée" ou "désaérée" à la position de maintien et inversement,
    - on enregistre l'évolution temporelle de la valeur réelle de pression $P_i$ pour les états "aérée" et désaérée" de la soupape de commutation et on la met sous forme de caractéristique,
    - on commence un cycle de réglage en déterminant, par utilisation de la valeur réelle de pression $P_{iin}$, au début du cycle de réglage, et de sa différence $\mu_{in}$ par rapport à la valeur de consigne de pression $P_{sin}$ au début du cycle de réglage, à partir des caractéristiques, à priori, une durée de mise en circuit $T_{ein}$ pour la soupape de commutation,
        - on utilise la caractéristique 1 pour l'état "aéré" de la soupape de commutation, lorsque la différence $\mu_{in}$ est supérieure à 0 et
        - on utilise la caractéristique 2 pour l'état "désaéré" de la soupape de commutation, lorsque la différence $\mu_{in}$ est inférieure à 0,
    - On effectue, à partir de la caractéristique 1, 2 correspondante, une association de la valeur de consigne de pression $P_{sin}$ au début du cycle de réglage par rapport à un temps de mise hors circuit $t_2$, ainsi qu'une association de la valeur réelle de pression $P_{iin}$ par rapport à un temps de mise en circuit $t_1$ et on détermine la durée de mise en circuit $t_{ein}$, à partir de la différence entre le temps de mise hors $t_2$ et le temps de mise en circuit $t_1$, caractérisé en ce que

- lors de la détermination de la durée de mise en circuit T$_{ein}$, on prend en plus en considération les temps morts T$_{ein}$, T$_{aus}$, lors de la mise en circuit et de la mise hors circuit de la soupape de commutation, le temps mort T$_{ein}$ étant la durée de mise en circuit minimale de la soupape de commutation, pour laquelle a encore lieu une modification de pression et le temps mort T$_{aus}$ étant le temps de mise hors service, résultant de la soupape de commutation, de cette dernière, la détermination s'effectuant selon la formule,

$$T_{ein} = T_{ein} + (t_2 - t_1) - T_{aus},$$

- en ce que la soupape de commutation est branchée, dans une phase I du cycle de réglage, pour une durée correspondant à la durée de mise en circuit T$_{ein}$ à l'état "aéré" ou "désaéré" correspondant à la caractéristique (1, 2),
- en ce que, à la suite de la phase 1 du cycle de régulation, lors d'une phase II de ce cycle de régulation, la soupape de commutation est branchée, pour une durée t$_H$ déterminée, à l'état "maintien",
- en ce que la somme de la durée de mise en circuit t$_{ein}$ et de la durée t$_H$ des deux phases I et II du cycle de régulation donne une durée t$_{ges}$, et
- un nouveau cycle de régulation commence, après écoulement de la durée t$_{ges}$.

2. Procédé selon la revendication 1, caractérisé en ce que la durée t$_H$ de la phase II du cycle de régulation est déterminée de façon que les processus d'oscillation de la pression après commutation de la soupape de commutation, pour la faire passer à l'état "maintien", sont supprimés avant que commence un nouveau cycle de régulation.

3. Procédé selon la revendication 1, caractérisé en ce que, pendant la phase II du cycle de régulation, la valeur réelle de pression P$_i$ est appréhendée cycliquement et une valeur efficace est déterminée, au moyen d'un filtrage passe-bas, la durée t$_H$ étant déterminée de façon que la valeur efficace corresponde sensiblement à la valeur réelle de pression P$_i$ à l'état d'oscillation.

4. Procédé selon la revendication 1, caractérisé en ce que la durée t$_H$ est décrémentée à partir d'une valeur initiale t$_{H,Anfang}$ pour les cycles de régulation futur, d'une valeur déterminée, lorsque, à la fin d'un cycle de régulation, une

différence μ$_{Ende}$, excédant une valeur de seuil SW$_{μEnde}$, a été constatée, aucune autre décrémentation ne s'effectuant lorsque la durée t$_H$ a atteint la valeur O.

5. Procédé selon la revendication 4, caractérisé en ce que la valeur de seuil SW$_{μEnde}$ est augmentée lorsqu'il y a augmentation de la fréquence de la décrémentation de la durée t$_H$.

6. Procédé selon la revendication 4 ou 5, caractérisé en ce que, dans le cas où une différence μ$_{Ende}$ est inférieure à la valeur de seuil SW$_{μEnde}$, à la fin du cycle de régulation précédent, on rappelle à la valeur initiale de la durée t$_{H, Anfang}$, une durée t$_H$ ayant été auparavant décrémentée.

7. Procédé selon la revendication 4 ou 5, caractérisé en ce qu'en cas d'une différence μ$_{Ende}$ inférieure à la valeur de seuil SW$_{μEnde}$ à la fin du cycle de régulation précédent, une durée t$_H$ décrémentée, est incrémentée d'une valeur constante, aucune autre incrémentation ne s'effectuant lorsque la durée t$_H$ a atteint la valeur initiale de la durée t$_{H,Anfang}$.

8. Procédé selon l'une des revendications 4 à 7, caractérisé en ce que la valeur de laquelle la durée t$_H$ est décrémentée est constante.

9. Procédé selon l'une des revendications 4 à 7, caractérisé en ce que la valeur de laquelle la durée t$_H$ est décrémentée est fonction d'une relation fonctionnelle prédéterminée par rapport à la différence μ$_{Ende}$, l'occurence d'une augmentation de la valeur de la différence μ$_{Ende}$, provoquant l'augmentation de cette valeur.

10. Procédé selon l'une des revendications 1 à 9, caractérisé en ce que, pendant la phase I du cycle de régulation,
- la valeur de consigne de pression P$_S$ existant instantanément et la valeur réelle de pression P$_I$ existant instantanément sont appréhendées cycliquement,
- il est contrôlé si la différence μ présente un autre signe que celui présenté par la différence μ$_{in}$ au début du cycle de régulation,
  - en cas de différence dans la signe de la différence μ par rapport à la différence μ$_{in}$, le cycle de régulation est interrompu,
    - la soupape de commutation étant de ce fait commutée de façon limitée, à l'état "maintien", de manière que la soupape de commutation puisse justement régler cet état et,

- un nouveau cycle de régulation commence alors,

- il est formé la différence $\beta$ en soustrayant de la valeur de consigne de pression $P_s$ existant instantanément la valeur de consigne de pression $P_{sin}$ existant au début du cycle de régulation,

- dans le cas où il y a dépassement, d'une valeur de seuil $SW_\beta$, de la différence $\beta$, la durée de mise en circuit $T_{ein}$ est de nouveau déterminée,

- le temps de mise hors circuit $t_2$ étant l'objet d'une nouvelle détermination, pour la valeur de consigne de pression $P_S$ existant instantanément, une nouvelle durée de mise en circuit tein pour la phase 1 du cycle de régulation étant déterminée à l'aide des paramètres $t_1$, $T_{ein}$, $Ta_{us}$, valant au début du cycle de régulation,

- la valeur déjà écoulée de la durée de mise en circuit $T_{ein}$ étant soustraite de la durée mise en circuit $T_{ein}$ en vue de déterminer la valeur restante de la durée de mise en circuit $T_{ein, Rest}$ et,

- la soupape de commutation étant laissée, pour une durée correspondant à la durée de mise en circuit $T_{ein,Rest}$ restante, dans l'état de commutation correspondant à phase I du cycle de régulation, suite à quoi on passe à la phase II du cycle de régulation initial.

11. Procédé selon l'une des revendications 1 à 10, caractérisé en ce que, pendant la phase I d'un cycle de régulation,

- la valeur de consigne de pression $P_S$ existant instantanément et la valeur réelle de pression $P_I$ sontappréhendées de façon cyclique,

- on forme à partir de ces deux grandeurs, la différence $\mu$,

- on compare la différence $\mu$, résultant des valeurs de l'étape d'exploration en cours, à la différence $\mu_{last}$ résultant des valeurs de l'étape d'exploration précédente,

- en cas de différences dans le signe des différences $\mu$ et $\mu_{last}$, il est effectué un arrêt du cycle de régulation, la soupape de commutation étant limitée temporellement à l'état "maintien" de manière que cette soupape de commutation puisse justement régler cet état, et

- un nouveau cycle de régulation est commencé à l'achèvement de la Phase II réduite temporellement du cycle de régulation.

12. Procédé selon l'une des revendications 1 à 11, caractérisé en ce que, lors du passage I-II, de la phase I à la phase II d'un cycle de régulation

- on forme la différence $\mu_{I-II}$ par soustraction de la valeur réelle de pression $P_{iI-II}$ de la valeur de consigne de pression $P_{sI-II}$, et

- en cas de dépassement, d'une valeur de seuil $SW_{\mu I-II}$, de la différence $\mu_{I-II}$, il est effectué une réduction de la durée $t_H$ pour ce cycle de régulation.

13. Procédé selon la revendication 12, caractérisé en ce que la réduction de la durée $t_H$ s'effectue de la valeur d'une durée constante.

14. Procédé selon la revendication 13, caractérisé en ce que la réduction de la durée $t_H$ s'effectue en fonction de la différence $\mu_{I-II}$, la réduction de la durée $t_H$ augmentant lorsque la différence $\mu_{I-II}$ augmente.

15. Procédé selon l'une des revendications 1 à 14, caractérisé en ce que, pendant la phase II d'un cycle de régulation,

- la valeur de consigne de pression $P_S$ existant instantanément et la valeur réelle de pression $P_I$ sontappréhendées de façon cyclique,

- on forme à partir de ces deux grandeurs, la différence $\mu$, et

- en cas de dépassement, d'une valeur de seuil $SW_{\mu II}$, de la différence $\mu$, il est effectué une interruption du cycle de régulation, en branchant la soupape de commutation temporellement, de façon limitée, à l'état "maintien", de manière que cette soupape de commutation puisse justement régler cet état, et

- à achèvement de la phase II, réduite temporellement, du cycle de régulation, est commencé un nouveau cycle de régulation.

16. Procédé selon l'une des revendications 1 à 15, caractérisé en ce que les caractéristiques (1, 2) sont enregistrées à intervalles de temps déterminés, de façon répétitive, lorsque l'on est dans un état neutre du point de vue de la pression, les intervalles de temps étant mesurés de manière que les influences, imputables à l'usure ainsi qu'aux points de fonctionnement, des caractéristiques (1, 2) soient compensées lors de la mise en oeuvre du procédé.

17. Procédé selon la revendication 16, caractérisé en ce que l'état de pression neutre est dérivé, pour un véhicule, de la condition pour laquelle la vitesse du véhicule $V_F$ doit être également à zéro.

*Fig. 1*

*Fig. 2*

EP 0 408 844 B1

# Fig. 3

(1.) $t_{ab} = 0$

(2.) $(p_{iin} \, , \, p_{sin})$

(3.) $\mu_{in} = p_{sin} - p_{iin}$

(4.)

$p_{sin}$
$p_{iin}$
$t_1 \quad t_2$

$p_{iin}$
$p_{sin}$
$t_1 \quad t_2$

(5.) $t_{ein} = T_{ein} + (t_2 - t_1) - T_{aus}$

(6.) Schaltzustand aus geben solange Zeit dauer $(t_{ein} - t_{ab}) \geq 0$

(6.1) $(p_s \, , \, p_i)$

(6.2) Aktualisieren $t_{ab}$

(7.) $t_{ab} = 0$

(6.3) $sign(\mu) == sign(\mu_{in})$

(6.4) Abbruch

(8.) $\mu_{I-II} = p_{sI-II} - p_{iI-II}$

(9.) $|\mu_{I-II}| \leq SW_{\mu I-II}$

(6.5) $\beta = p_s - p_{sin}$

(9.1) Reduzierung $t_H$

(6.6) $|\beta| > SW_\beta$

(50.1) (50.3)

(6.7) $p_{sin} = p_s$

(50.5)

16

(50.2)        (50.4)                       (50.6)

(10.)

Schaltzustand "Halten" ausgeben solange $(t_H - t_{ab}) >= 0$

(11.)

$t_H = t_{H,Anfang}$

(12.)

$|\mu_{Ende}| > SW_{\mu Ende}$

(13.)

$t_H > 0$

(15.)

$t_H$ dekrementiert & $t_H < t_{H,Anfang}$

(14.)

$t_H$ dekrementieren

(16.)

$t_H$ inkrementieren

(17.)

$v_F == 0$

(10.1) Aktualisieren $t_{ab}$

(18.) Kennlinie aktualisieren

(10.2) $p_s , p_i$

(10.3) $\mu = p_s - p_i$

(10.4) $|\mu| > SW_{\mu I-II}$

(10.5) Abbruch